# EUROPÄISCHE PATENTSCHRIFT

(11) **EP 3 726 036 B1**
(45) Veröffentlichungstag und Bekanntmachung des Hinweises auf die Patenterteilung: **20.05.2026**
(21) Anmeldenummer: 20166213.7
(22) Anmeldetag: 27.03.2020
(51) Int. Cl.: F02D 41/00, F02B 25/04, F02D 17/02, F02D 41/40

(54) **VERFAHREN ZUM BETREIBEN EINES GROSSMOTORS SOWIE GROSSMOTOR**
LARGE MOTOR AND METHOD FOR OPERATING A LARGE MOTOR
PROCÉDÉ DE FONCTIONNEMENT D'UN GRAND MOTEUR AINSI QUE GRAND MOTEUR

(30) Priorität: 15.04.2019 EP 19169361
(43) Veröffentlichungstag der Anmeldung: 21.10.2020
(73) Patentinhaber: WinGD AG, 8400 Winterthur (CH)
(72) Erfinder: Hanz, Timo, 8320 Fehraltorf (CH)
(74) Vertreter: IPS Irsch AG

(56) Entgegenhaltungen:
- EP-A1- 2 977 596
- DE-A1- 102004 058 942
- DE-A1- 102013 213 697
- DE-A1- 102014 009 087
- US-A1- 2013 298 869
- US-A1- 2015 361 912
- US-B2- 9 631 569
- KONRAD JOHANNES ET AL: "Engine Efficiency Optimization under Consideration of NO X - and Knock-Limits for Medium Speed Dual Fuel Engines in Cylinder Cut-Out Operation", SAE 2010 COMMERCIAL VEHICLE ENGINEERING CONGRESS SAE TECHNICAL PAPERS, vol. 1, 10 April 2018 (2018-04-10), US, XP093124696, ISSN: 0148-7191, Retrieved from the Internet <URL:https://dx.doi.org/10.4271/2018-01-1151> DOI: 10.4271/2018-01-1151
- MAN -: "G70ME-C-GI design updates", 25 February 2019 (2019-02-25), pages 1 - 3, XP093124703, Retrieved from the Internet <URL:https://www.man-es.com/docs/default-source/marine/tools/g70me-c-gi-design-updates.pdf?sfvrsn=7ec34d45_8> [retrieved on 20240129]
- MAN: "Whatever your vessel, we have a fuel solution that fits", 1 July 2019 (2019-07-01), XP093132076, Retrieved from the Internet <URL:https://man-es.com/docs/default-source/marine/whatever-your-vessel-we-have-a-fuel-solution-that-fits-manpm-00-0593-preview16b6299099944e8b975c092c28e9832c.pdf?sfvrsn=725d3408_14> [retrieved on 20240216]

## Beschreibung

Die Erfindung betrifft ein Verfahren zum Betreiben eines längsgespülten dual-fuel Zweitakt-Grossdieselmotors der mehrere Zylinder aufweist, sowie einen längsgespülten dual-fuel Zweitakt-Grossdieselmotor gemäss dem Oberbegriff des unabhängigen Patentanspruchs der jeweiligen Kategorie.

Grossmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossmotoren haben typischerweise Zylinder, deren Innendurchmesser (Bohrung) mindestens 200 mm beträgt. Heutzutage werden Grossmotoren mit einer Bohrung von bis zu 960 mm oder sogar noch mehr eingesetzt.

Es sind verschiedene Arten von Grossmotoren bekannt, die jeweils als Zweitakt- oder als Viertakt-Motoren ausgestaltet sein können. Unter den Aspekten des wirtschaftlichen und effizienten Betriebs, der Einhaltung von Abgasgrenzwerten und der Verfügbarkeit von Ressourcen sucht man auch nach Alternativen zum klassischerweise als Brennstoff für Grossmotoren verwendeten Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas) bekannt.

Eine ebenfalls bekannte Alternative zum reinen Betrieb mit Schweröl ist es, Grossmotoren so auszugestalten, dass sie mit zwei oder noch mehr unterschiedlichen Brennstoffen betrieben werden können, wobei der Motor je nach Betriebssituation oder Umgebung entweder mit dem einen Brennstoff oder mit dem anderen Brennstoff betrieben wird. Ein solcher Grossmotor, der auch als Multi-Fuel Grossmotor bezeichnet wird, kann während des Betriebs von einem ersten Modus, in welchem ein erster Brennstoff verbrannt wird, in einen zweiten Modus, in welchem ein zweiter Brennstoff verbrannt wird, umgeschaltet werden und umgekehrt.

Eine bekannte Ausgestaltung eines Grossmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein gasförmiger Brennstoff, z.B. Erdgas oder Methan, zur Verbrennung in den Brennraum eingebracht wird, und andererseits in einem Flüssigmodus, in welchem ein flüssiger Brennstoff wie Schweröl oder ein anderer flüssiger Brennstoff in demselben Motor verbrannt werden können. Diese Grossmotoren können dabei sowohl Zweitakt- als auch Viertaktmotoren sein, insbesondere auch längsgespülte Zweitakt-Grossdieselmotoren.

Grossmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Bei den oben genannten Dual-Fuel Motoren ist es beispielsweise für den Gasmodus bekannt, das Gas im gasförmigen Zustand mit der Spülluft zu vermischen, um so im Brennraum des Zylinders ein zündfähiges Gemisch zu erzeugen. Bei diesem Niederdruckverfahren erfolgt dann die Zündung des Gemisches im Zylinder üblicherweise, indem im richtigen Moment eine kleine Menge flüssiger, selbstzündender Brennstoff in den Brennraum des Zylinders bzw. in die Vorkammer eingespritzt wird, die dann zur Zündung des Luft-Gas-Gemisches führt.

Ferner sind auch Mischformen aus dem Ottobetrieb und dem Dieselbetrieb bekannt.

Es sind auch Grossmotoren bekannt, die als reine Gasmotoren ausgestaltet sind, also als Motoren, die nur mit Gas als Brennstoff betrieben werden.

Ganz gleich ob es sich um einen Dual-Fuel Motor oder um einen reinen Gasmotor handelt, ist der Vorgang der Einbringung des Brennstoffs Gas in den Brennraum des Zylinders und die Erzeugung des Luft-Gas-Gemisches von entscheidender Bedeutung für den zuverlässigen, schadstoffarmen und sicheren Betrieb eines solchen Motors.

Im Gasmodus ist insbesondere das Einstellen des korrekten Verhältnisses von Spülluft zu Gas, das sogenannte Luft-Brennstoff-Verhältnis, das auch als Lambda-Wert (λ-Wert) bezeichnet wird, von entscheidender Bedeutung. In einem Grossdieselmotor wird die Spül- oder Ladeluft üblicherweise von einem Turbolader zur Verfügung gestellt, der einen Spül- oder Ladeluftdruck generiert, welcher von der Last des Motors und damit von der Leistung bzw. vom Drehmoment bzw. der Drehzahl des Motors abhängt. Für einen gegebenen Ladeluftdruck lässt sich die Masse der Luft im Zylinder berechnen und dann für das jeweilige benötigte Antriebsmoment, welches vom Motor generiert wird, bzw. für die gewünschte Drehzahl eine geeignete Menge des gasförmigen Brennstoffs bestimmen, der für diesen Betriebszustand zu einem optimalen Verbrennungsprozess führt.

Insbesondere, wenn der Gasmodus nach dem Otto-Prinzip betrieben wird, ist die korrekte Einstellung des Luft-Brennstoff-Verhältnisses von entscheidender Bedeutung für einen möglichst schadstoffarmen, effizienten und wirtschaftlichen Betrieb des Motors. Ist der Gasanteil zu hoch, so wird das Luft-Brennstoff-Gemisch zu fett. Die Verbrennung des Gemischs erfolgt zu schnell oder zu früh, was zum Klopfen des Motors führen kann. Da der Verbrennungsprozess dann nicht mehr korrekt auf die Kolbenbewegung im Zylinder abgestimmt ist, führt dies unter anderem auch dazu, dass die Verbrennung teilweise gegen die Bewegung des Kolbens arbeitet. Ist der Luftanteil zu hoch, d.h. der Lambda-Wert zu gross, so ist das Luft-Brennstoff-Gemisch zu mager, es kommt zu Zündaussetzern, was natürlich auch negativ im Hinblick auf einen effizienten und schadstoffarmen Betrieb des Motors ist.

Man ist daher bei Grossmotoren insbesondere im Gasmodus bemüht, den Lambda-Wert in einem optimalen Bereich zwischen der Klopfgrenze einerseits und der Zündaussetzgrenze andererseits zu halten.

Die Einstellung des korrekten Luft-Brennstoff-Verhältnisses im Ottobetrieb führt bei Grossmotoren und insbesondere bei längsgespülten Grossmotoren insbesondere im unteren Lastbereich des Motors zu Problemen, weil in diesem unteren Lastbereich zu viel Spülluft in den Zylinder einströmen kann, um mit der für diese Last benötigten Gasmenge ein Luft-Brennstoff-Gemisch bereitzustellen, das den korrekten Lambda-Wert hat. Dies liegt in erster Linie daran, dass der Ladeluftdruck, mit welchem die Spül- oder Ladeluft im Einlassreceiver zur Verfügung steht, nicht unter den normalen Umgebungsluftdruck, also etwa ein bar (100 kPa) abgesenkt werden kann. Daher kann auch der Massenstrom der Spülluft, die aus dem Einlassreceiver in den jeweiligen Zylinder einströmt, nicht unter einen Minimalwert abgesenkt werden. Da die Spülluftöffnungen, durch welche die Spülluft aus dem Einlassreceiver in die Zylinder einströmt, durch die Kolbenbewegung geöffnet und verschlossen werden, ist es gerade im unteren Lastbereich des Motors möglich, dass selbst bei dem minimal möglichen Massenstrom noch zu viel Masse an Ladeluft in den Zylinder einströmt, um mit der geringen Menge bzw. Masse an Gas, die bei dieser niedrigen Last eingebracht wird, ein Luft-Brennstoff-Gemisch zu bilden, welches den gewünschten Lambda-Wert aufweist.

Um dieses Problem zu lösen, ist aus dem Stand der Technik für den unteren Lastbereich ein Verfahren bekannt, dass als "early exhaust valve opening" (eEVO) bezeichnet wird. Gemäss diesem Verfahren wird im Gasbetrieb im unteren Lastbereich das Auslassventil des Zylinders nach dem Verbrennungsprozess extrem früh geöffnet, jedenfalls deutlich früher als es in einem normalen Arbeitszyklus des Zylinders geöffnet würde. Dies hat zur Folge, dass ein erheblicher Teil der beim Verbrennungsprozess generierten Energie nicht mehr für den Antrieb des Kolbens verwendet wird, sondern durch das deutlich früher geöffnete Auslassventil abströmt. Die Motorensteuerung registriert dann, dass der Motor das gewünschte Drehmoment nicht mehr erbringt und erhöht daher die Gasmenge, die bei dem nächsten Arbeitszyklus in den Zylinder eingebracht wird. Durch diese Erhöhung der Gasmenge senkt sich der Lambda-Wert ab und kann so auf den gewünschten Wert eingestellt werden.

Auch wenn sich dieses Verfahren in der Praxis sehr bewährt hat, um den Lambda-Wert auch im unteren Lastbereich in den gewünschten Grenzen zu halten, so ist es unter energetischen Aspekten weniger vorteilhaft, denn ein Teil der beim Verbrennungsprozess generierten Energie wird in das Abgassystem abgeführt und steht daher nicht mehr für die Expansionsarbeit zur Verfügung, welche den Kolben nach unten bewegt. Dieses Verfahren führt daher insbesondere im unteren Lastbereich zu einem erhöhten Gasverbrauch und damit zu einer reduzierten Energieeffizienz des Grossmotors.

DE 10 2013 213697 A1 beschreibt ein
Verfahren zum Betreiben einer quantitätsgeregelten Brennkraftmaschine mit mindestens zwei Zylindern, mit dem Schritt des Bestimmens einer Anzahl abzuschaltender Zylinder oder Zylindergruppen abhängig von dem momentanen Betriebszustand.

Ausgehend von diesem Stand der Technik ist es daher eine Aufgabe der Erfindung, ein Verfahren zum Betreiben ein Grossmotors in einem Gasmodus vorzuschlagen, welches über den gesamten Lastbereich und insbesondere auch im unteren Lastbereich einen energieeffizienten, umweltfreundlichen und schadstoffarmen Betrieb des Grossmotors ermöglicht. Ferner ist es eine Aufgabe der Erfindung, einen entsprechenden Grossmotor vorzuschlagen. Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren vorgeschlagen zum Betreiben eines längsgespülten dual-fuel Grossdieselmotors, der mehrere Zylinder aufweist, in einem Gasmodus, wobei in einem Brennraum durch Einbringen eines Brennstoffs ein vorgemischtes Luft-Brennstoff-Gemisch bereitgestellt wird, das ein Luft-Brennstoff-Verhältnis aufweist, wobei mindestens ein Kontrollparameter überwacht wird, welcher von dem Luft-Brennstoff-Verhältnis oder von einer Last abhängig ist, mit welcher der Grossmotor betrieben wird, und wobei der Grossmotor in einem Reduktionsmodus betrieben wird, falls der Kontrollparameter einen Grenzwert erreicht, wobei im Reduktionsmodus mindestens ein Zylinder abgeschaltet wird, sodass der Grossmotor mit einer reduzierten Anzahl von Zylindern betrieben wird, wobei für die reduzierte Anzahl von Zylindern das Luft-Brennstoff-Verhältnis angepasst wird.

Dadurch, dass der Grossmotor im Reduktionsmodus mit einer reduzierten Anzahl von Zylindern betrieben wird, ist für eine vorgegebene Last diejenige Leistung, welche von einem im Reduktionsmodus noch aktiven Zylinder erbracht werden muss, grösser als diejenige Leistung, die dieser Zylinder erbringen müsste, wenn bei der gleichen Last alle Zylinder des Grossmotors aktiv wären. In anderen Worten wird die von dem Grossmotor zu erbringende Leistung im Reduktionsmodus auf weniger Zylinder verteilt, sodass sich die pro aktivem Zylinder zu erbringende Leistung erhöht. Da jeder dann noch aktive Zylinder jeweils eine höhere Leistung erbringen muss, als wenn alle Zylinder des Grossmotors aktiv wären, muss in die im Reduktionsmodus noch aktiven Zylinder eine grössere Menge an Brennstoff (Gas) eingespritzt werden, wodurch sich das Luft-Brennstoff-Verhältnis absenkt. Für die im Reduktionsmodus noch aktiven Zylinder wird dann das Luft-Brennstoff-Verhältnis auf einen optimalen Wert eingestellt.

Grundsätzlich lässt sich das erfindungsgemässe Verfahren für alle Lastbereiche des Grossmotors einsetzen. Das erfindungsgemässe Verfahren eignet sich insbesondere auch für den Betrieb des Grossmotors bei Teillast oder im Tieflastbereich, wenn der Grossmotor beispielsweise mit höchstens 25% seiner Volllast betrieben wird.

Mit dem erfindungsgemässen Verfahren ist es somit möglich, auch im Gasmodus bei niedrigen oder auch sehr niedrigen Lasten das Luft-Brennstoff-Verhältnis auf einen Wert unterhalb der Zündaussetzgrenze einzustellen und somit einen energieeffizienten, umweltschonenden und schadstoffarmen Betrieb des Grossmotors sicherzustellen.

Insbesondere im Vergleich zu solchen Verfahren, welche auf der besonders frühen Öffnung des Auslassventils nach dem Verbrennungsprozess beruhen, hat das erfindungsgemässe Verfahren den Vorteil, dass von der im Verbrennungsprozess generierte Energie praktisch nichts in ungenutzter Weise in das Abgassystem abgeführt wird, sondern im Wesentlichen die gesamte durch die Verbrennung generierte Energie für die Expansionsarbeit bzw. für die Bewegung des Kolbens genutzt wird. Daher ist das erfindungsgemässe Verfahren energetisch gesehen deutlich günstiger und führt insbesondere bei sehr niedrigen Lasten zu einem drastisch geringeren Gasverbrauch. Im Vergleich zu anderen Verfahren lässt sich mit dem erfindungsgemässen Verfahren bei sehr niedrigen Lasten von beispielsweise höchstens 25% der Volllast oder höchstens 15% oder 10% der Volllast der Gasverbrauch um mindestens die Hälfte oder sogar um zwei Drittel oder noch mehr senken. Dies ist natürlich auch unter wirtschaftlichen Aspekten ein grosser Vorteil. Der Gasverbrauch oder auch der spezifische Gasverbrauch wird beispielsweise in Form der Masse des Gases angegeben, die für eine Kilowattstunde benötigt wird, also in g/kWh, wobei g die Masse des für die Verbrennung eingebrachten Gases in Gramm bezeichnet.

Das erfindungsgemässe Verfahren ist aber nicht auf diese niedrigen Lastbereiche beschränkt, sondern lässt sich über den gesamten Lastbereich des Grossmotors vorteilhaft anwenden. Anhand des Kontrollparameters kann grundsätzlich bei jedem Lastbereich überprüft werden, ob der Grossmotor zum Erreichen der jeweils gewünschten Last bzw. der jeweils gewünschten Drehzahl mit einer reduzierten Anzahl von aktiven Zylindern betrieben werden kann. Mit dem Begriff "aktiver Zylinder" ist damit ein Zylinder gemeint, in welchem ein Verbrennungsprozess stattfindet, der also zum Erzeugen des Drehmoments auf die Kurbelwelle beiträgt. So kann es beispielsweise sein, dass es die Umgebungsbedingungen, z. B. Lufttemperatur oder Luftfeuchtigkeit, ermöglichen, die von dem Grossmotor geforderte Leistung mit einer reduzierten Anzahl von Zylindern zu erbringen. Ist ein von einem solchen Grossmotor angetriebenes Schiff z. B. unter arktischen Umgebungsbedingungen unterwegs, beispielsweise in arktischen Gewässern, so ist die Umgebungsluft, die von dem Turbolader bzw. den Turboladern angesaugt wird, sehr kalt und sehr trocken. Aufgrund der hohen Dichte der Luft braucht der Turbolader nicht mehr so viel Leistung zu erbringen, um die Ladeluft bereitzustellen. Somit kann das Waste-Gate-Ventil, mit dem die Menge der Verbrennungsgase eingestellt wird, welche dem Turbolader zugeführt wird, weiter geöffnet werden, sodass eine grössere Menge von Verbrennungsgasen am Turbolader vorbeigeführt wird. Wenn das Waste-Gate-Ventil dann beispielsweise sehr weit oder ganz geöffnet ist, kann nach einer Ausführungsform des erfindungsgemässen Verfahrens mindestens ein Zylinder abgeschaltet werden und das Waste-Gate-Ventil weiter oder ganz geschlossen werden, um den Ladeluftdruck und damit die erhöhte Menge an Ladeluft bereitzustellen, die benötigt wird, um die gleiche Leistung des Grossmotors mit einer reduzierten Anzahl von Zylindern zu erbringen.

Im Reduktionsmodus kann der spezifische Gasverbrauch auch dadurch gesenkt werden, dass die reduzierte Anzahl der dann noch aktiven Zylinder jeweils mit einem erhöhten mittleren effektiven Druck betrieben wird. Auch hierdurch kann der spezifische Gasverbrauch um ein paar g/kWh reduziert werden.

Als Kontrollparameter, anhand dessen entschieden wird, ob der Grossmotor im Reduktionsmodus betrieben wird, eignen sich mehrere Parameter, insbesondere auch solche, die während des Betriebs des Grossmotors sowieso bekannt sind oder ermittelt werden.

Gemäss einer bevorzugten Ausführungsform ist der Kontrollparameter die Last oder die Drehzahl ist, mit welcher der Grossmotor betrieben wird. Die Last wird dabei üblicherweise in Prozent der Volllast angegeben.

Eine ebenfalls bevorzugte Ausführungsform ist es, wenn der Kontrollparameter das Luft-Brennstoff-Verhältnis ist, also der Lambda-Wert.

Gemäss einer weiteren bevorzugten Ausführungsform ist der Kontrollparameter vom Transientverhalten des Grossmotors abhängig. Hierzu wird beispielsweise das transiente Verhalten des Drehmoments oder der Drehzahl des Motors ermittelt. Die Änderungen des Drehmoments oder der Drehzahl können dann beispielsweise als Kontrollparameter verwendet werden oder in den Kontrollparameter einfliessen.

Auch ist es möglich, dass die Stellung des Waste-Gate-Ventils, mit dem die Menge der Verbrennungsgase eingestellt wird, welche dem Turbolader zugeführt wird, als Kontrollparameter verwendet wird oder in den Kontrollparameter einfliesst.

Eine weitere bevorzugte Ausführungsform besteht darin, dass der Kontrollparameter vom Zündsprung abhängig ist, welcher das Verhältnis aus dem maximalen Druck im Zylinder und dem Kompressionsdruck im Zylinder ist.

Es versteht sich, dass natürlich auch mehr als ein Kontrollparameter herangezogen werden kann, um zu entscheiden ob der Grossmotor im Reduktionsmodus betrieben wird.

Gemäss einer bevorzugten Verfahrensführung wird im Reduktionsmodus eine minimale Anzahl von Zylindern ermittelt, welche für den Reduktionsmodus benötigt werden. Die Anzahl der im Reduktionsmodus noch aktiven Zylinder zu minimieren, hat auch den Vorteil, dass die Masse an Gas, die jeweils in die aktiven Zylinder eingebracht wird, maximiert wird, wodurch sich der Lambda-Wert bei konstant gehaltenen Spülluftbedingungen reduzieren lässt.

Gemäss einer besonders bevorzugten Ausführungsform wird bzw. werden im Reduktionsmodus mindestens ein, vorzugsweise mehrere Betriebsparameter des Grossmotors angepasst. Das heisst aufgrund der reduzierten Anzahl der im Reduktionsmodus noch aktiven Zylinder erfolgt eine Anpassung von mindestens einem Betriebsparameter. Dies kann beispielsweise der Ladeluftdruck sein, mit welchem die Spülluft in einem Einlassreceiver bereitgestellt wird, oder der Einspritzdruck, also der Druck, mit welchem das als Brennstoff verwendete Gas in die Zylinder eingebracht wird, oder der Druck des Hydraulikmediums, beispielsweise Öl, mit welchem Motorkomponenten , beispielsweise die Auslassventile, betrieben werden, oder Zeitpunkt und Umfang der Zylinderschmierung, oder Druck des Schmiermittels.

Weiter Betriebsparameter, welche während des Reduktionsmodus zumindest für die dann noch aktiven Zylinder angepasst werden können, sind einer oder mehrere der folgenden Betriebsparameter: Schliesszeitpunkt des Auslassventils des Zylinders, Öffnungszeitpunkt des Auslassventils, Einspritzbeginn für die Einbringung des Brennstoffs, ein Einspritzdruck, mit welchem der Brennstoff eingebracht wird, Zündzeitpunkt des Luft-Brennstoff-Gemisches, maximaler Druck im Zylinder, wobei diese Aufzählung nicht abschliessend ist.

Für die Anpassung des Luft-Brennstoff-Verhältnisses im Reduktionsmodus gibt es auch mehrere Möglichkeiten, von denen hier einige bevorzugte aufgezählt werden. Selbstverständlich ist es auch möglich, mehrere Möglichkeiten miteinander zu kombinieren.

Im Reduktionsmodus kann das Luft-Brennstoff-Verhältnis über einen Ladeluftdruck oder über eine Ladelufttemperatur angepasst wird. Der Ladeluftdruck und die Ladelufttemperatur bezeichnen dabei den Druck und die Temperatur der im Einlassreceiver bereitgestellten Spül- oder Ladeluft.

Im Reduktionsmodus kann das Luft-Brennstoff-Verhältnis über den Öffnungszeitpunkt des Auslassventils oder über den Schliesszeitpunkt des Auslassventils angepasst werden.

Im Reduktionsmodus kann das Luft-Brennstoff-Verhältnis über den Einspritzbeginn oder den Einspritzdruck des Brennstoffs angepasst werden.

Eine weitere bevorzugte Massnahme besteht darin, dass der Kontrollparameter im Reduktionsmodus überwacht wird, und der Reduktionsmodus beendet wird, falls der Kontrollparameter die Bedingung für den Reduktionsmodus nicht mehr erfüllt. Hierzu wird beispielsweise der Kontrollparameter kontinuierlich oder in periodischen Abständen ermittelt, und falls der Kontrollparameter den Grenzwert wieder überschreitet oder unterschreitet (je nach gewähltem Kontrollparameter), wird der Reduktionsmodus beendet, und der Grossmotor wird beispielsweise wieder im normalen Gasmodus oder im Flüssigmodus betrieben. Es wird also kontinuierlich oder in regelmässigen Abständen geprüft, ob es noch möglich ist, den Grossmotor mit einer reduzierten Anzahl von Zylindern zu betreiben, ohne dass das Luft-Brennstoff-Verhältnis einen vorgebbaren Toleranzbereich verlässt.

Eine weitere bevorzugte Massnahme besteht darin, dass der Kontrollparameter im Reduktionsmodus überwacht wird, und die reduzierte Anzahl von Zylindern angepasst wird. Gemäss dieser Massnahme wird also während des Reduktionsmodus kontinuierlich oder in vorgebbaren Zeitabständen überprüft, ob die Anzahl der noch aktiven Zylinder, mit denen der Grossmotor gerade betrieben wird, geändert werden soll oder nicht, ob also noch ein weiterer Zylinder abgeschaltet werden kann, oder, ob die Anzahl der aktiven Zylinder erhöht werden muss.

Durch die Erfindung wird ferner ein Grossmotor vorgeschlagen, der mit einem erfindungsgemässen Verfahren betrieben wird.

Der Grossmotor ist als längsgespülter Zweitakt-Grossdieselmotor ausgestaltet.

Weiter ist der Grossmotor als Dual-Fuel Grossdieselmotor ausgestaltet, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas als Brennstoff in den Brennraum eingebracht wird.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Schnittdarstellung eines Ausführungsbeispiels eines erfindungsgemässen Grossmotors
- Fig. 2:: ein schematische Darstellung zur Veranschaulichung der Abhängigkeit des Drehmoments vom Luft-Gas Verhältnis in dem Ausführungsbeispiel des Grossmotors, und
- Fig. 3:: eine schematische Darstellung des Drucks im Zylinder.

Mit dem Begriff "Grossmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird.

Bei der folgenden Beschreibung der Erfindung anhand von Ausführungsbeispielen wird mit beispielhaftem Charakter auf den für die Praxis besonders wichtigen Fall eines Grossmotors Bezug genommen, der als Dual-Fuel Motor ausgestaltet ist, also als ein Motor, der mit zwei unterschiedlichen Brennstoffen betrieben werden kann. Im speziellen kann dieses Ausführungsbeispiel des Grossmotors in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossmotor kann auch in einem Gasmodus betrieben werden, bei dem ein als Brennstoff dienendes Gas, beispielsweise Erdgas, in Form eines vorgemischten Luft-Brennstoff-Gemisches im Brennraum zur Zündung gebracht wird. Im speziellen arbeitet der Grossmotor im Gasmodus nach einem Niederdruckverfahren, d.h. das Gas wird im gasförmigen Zustand in den Zylinder eingebracht, wobei der Einspritzdruck des Gases höchstens 50 bar vorzugsweise höchstens 20 bar beträgt. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge selbstzündender flüssiger Brennstoff (z. B. Diesel oder Schweröl) in den Brennraum oder in eine Vorkammer eingebracht wird, der sich dann selbstentzündet und dadurch die Fremdzündung des Luft-Brennstoff-Gemisches im Brennraum verursacht.

Bei den hier beschriebenen Ausführungsbeispielen ist der Grossmotor als längsgespülter Dual-Fuel Zweitakt-Grossdieselmotor ausgestaltet.

Es versteht sich, dass die Erfindung nicht auf diesen Typ von Grossmotor und auf diese Verwendung beschränkt ist, sondern Grossmotoren im Allgemeinen betrifft. Dabei ist es auch möglich, dass der Grossmotor nur für die Verbrennung eines einzigen gasförmigen Brennstoffs, beispielsweise Erdgas ausgestaltet ist. Der Grossmotor kann also auch als Gasmotor ausgestaltet sein. Auch ist es möglich, dass der Grossmotor als Multi-Fuel Grossmotor ausgestaltet ist, der für die Verbrennung von mehr als zwei Brennstoffen ausgestaltet sein.

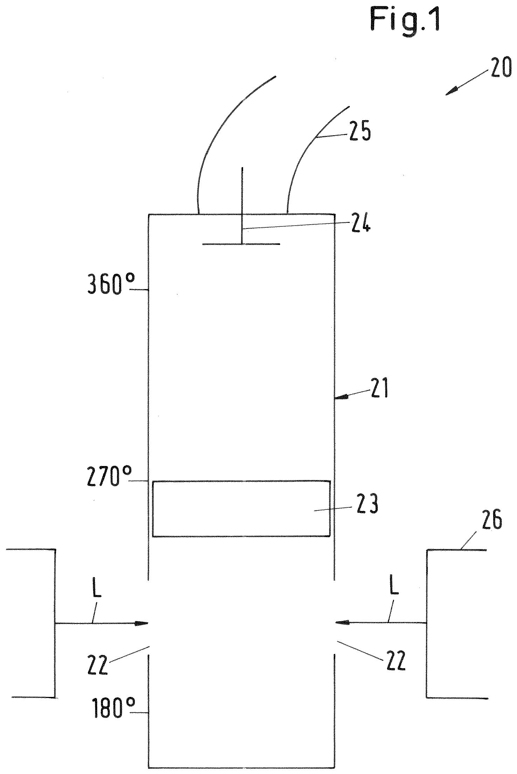

Fig. 1 zeigt in einer stark schematisierten Darstellung einen Zylinder 21 der mehreren Zylinder dieses Ausführungsbeispiels eines Grossmotors, der gesamthaft mit dem Bezugszeichen 20 bezeichnet ist. Im Inneren des Zylinders 21 ist in an sich bekannter Art ein Kolben 23 zwischen einem oberen Totpunkt und einem unteren Totpunkt hin und her bewegbar angeordnet.

Der Aufbau und die einzelnen Komponenten des Grossmotors 20, wie beispielsweise das Einspritzsystem für den Flüssigmodus, das Gaszuführsystem für den Gasmodus, das Gaswechselsystem, das Abgassystem oder das Turboladersystem für die Bereitstellung der Spül- bzw. Ladeluft, sowie die Kontroll- und Steuerungssystem für einen Grossmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung. Von diesen Komponenten ist in Fig. 1 nur ein Auslassventil 24 dargestellt, weil dies zum Verständnis der Erfindung ausreichend ist. Das Kontroll- und Steuerungssystem ist in modernen Grossmotoren ein elektronisches System, mit welchem sich üblicherweise alle Motor- oder Zylinderfunktionen, insbesondere die Einspritzung (Beginn und Ende der Einspritzung) und die Betätigung des Auslassventils, einstellen oder steuern bzw. regeln lassen.

Bei dem hier beschriebenen Ausführungsbeispiel eines längsgespülten Zweitakt-Grossdieselmotors 20 sind üblicherweise im unteren Bereich eines jeden Zylinders 21 bzw. Zylinderliners Spülluftschlitze 22 vorgesehen, die durch die Bewegung des Kolbens 23 im Zylinder 21 periodisch verschlossen und geöffnet werden, sodass die von dem Turbolader unter einem Ladeluftdruck in einem Einlassreceiver 26 bereitgestellte Spülluft durch die Spülluftschlitze 22 in den Zylinder 21 einströmen kann, solange diese geöffnet sind. Dies ist in Fig. 1 durch die beiden mit dem Bezugszeichen L versehenen Pfeile angedeutet. Im Zylinderkopf bzw. im Zylinderdeckel ist das meistens zentral angeordnete Auslassventil 24 vorgesehen, durch welches die Verbrennungsgase nach dem Verbrennungsprozess aus dem Zylinder 21 in ein Abgassystem 25 ausgetragen werden können. Das Abgassystem 25 leitet zumindest einen Teil der Verbrennungsgase zu einer Turbine (nicht dargestellt) des Turboladers, dessen Kompressor die Ladeluft im Einlassreceiver 26 unter dem Ladeluftdruck bereitstellt. Der Ladeluftdruck wird dabei üblicherweise über ein sogenanntes Waste-Gate-Ventil eingestellt, mit welchem die Menge der Verbrennungsgase eingestellt wird, welche dem Turbolader zugeführt wird.

Für das Einbringen des flüssigen Brennstoffs in den Brennraum des Zylinders 21 sind ein oder mehrere Brennstoffeinspritzdüsen vorgesehen (nicht dargestellt), die beispielsweise im Zylinderkopf in der Nähe des Auslassventils 24 angeordnet sind. Für die Gaszuführung im Gasmodus ist ein Gaszuführsystem vorgesehen (nicht dargestellt), das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens 23 liegt.

In Fig. 1 sind zusätzlich an der linken Seite verschiedene Kurbelwinkel angegeben. Der Kurbelwinkel gibt die Stellung der Kurbelwelle an und kennzeichnet in an sich bekannter Weise den Arbeitszyklus des Grossdieselmotors 20. Bei dem Kurbelwinkel von 180° befindet sich der Kolben 23 im unteren Tot- oder Umkehrpunkt, bei dem Kurbelwinkel von 360° befindet sich der Kolben 23 im oberen Tot- oder Umkehrpunkt. Bei der Ausgestaltung als Zweitaktmotor umfasst ein kompletter Arbeitszyklus 360°. Beginnend bei dem Kurbelwinkel von 0° - bei welcher der Kolben 23 in der gleichen Position ist wie bei 360°, nämlich im oberen Totpunkt - bewegt sich der Kolben 23 beim Expansionshub nach unten bis er bei 180° den unteren Totpunkt erreicht und sich dann beim Kompressionshub wieder nach oben bewegt, bis er den oberen Totpunkt bei 360° erreicht. In der Darstellung von Fig. 1 befindet sich der Kolben 23 gerade in einer Stellung, die dem Kurbelwinkel 270° entspricht.

Im Folgenden wird ferner beispielhaft auf den Anwendungsfall Bezug genommen, dass der Grossdieselmotor das Antriebsaggregat eines Schiffes ist.

Aufgrund der gesetzlichen Bestimmungen bezüglich der Abgaswerte müssen heute Grossdieselmotoren in Küstennähe häufig im Gasmodus betrieben werden, weil sonst die vorgeschriebenen Grenzwerte für den Abgasausstoss, insbesondere sind dies Stickoxide NOₓ und Schwefeldioxide, nicht mehr eingehalten werden können.

Die vorliegende Erfindung bezieht sich insbesondere auf den Betrieb des Grossmotors 20 im Gasmodus.

Im Gasmodus sind die Effizienz und die möglichst schadstoffarme Verbrennung des Luft-Brennstoff-Gemisches ganz empfindlich von dem Verhältnis der Menge an Luft und der Menge des als Brennstoff verwendeten Gases abhängig. Dieses Verhältnis wird üblicherweise durch den Lambda-Wert (λ-Wert) angegeben, welcher das Verhältnis aus der im Zylinder gefangenen Luftmasse zu derjenigen Luftmasse angibt, welche für eine stöchiometrische Verbrennung benötigt wird.

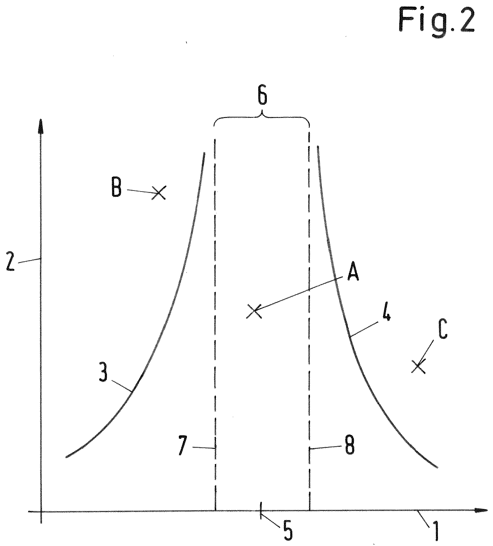

Fig. 2 zeigt in einer schematischen Darstellung einen beispielhaften Zusammenhang zwischen dem Luft-Brennstoff-Verhältnis 1 und dem vom Motor generierten Drehmoment 2, welches das Schiff antreibt. Diese Darstellung gilt für ein bestimmtes Drehmoment, was einer bestimmten Geschwindigkeit des Schiffes - oder einer bestimmten Drehzahl des Motors -, entspricht, wenn sich das Schiff in im Wesentlichen ruhigem Gewässer bewegt. Im speziellen ist das in Fig. 2 dargestellte Drehmoment 2 das BMEP (Brake Mean Effective Pressure) Drehmoment, was im Wesentlichen ein über einen Arbeitszyklus gemitteltes Drehmoment ist.

In der Darstellung in Fig. 2 sind für den Gasmodus zwei Grenzkurven zu sehen, nämlich eine Klopfgrenze (knocking-Kurve) 3 und eine Zündaussetzgrenze (misfiring-Kurve) 4. Bei Betriebszuständen, die sich darstellungsgemäss links der Klopfgrenze 3 befinden, also beispielsweise am Punkt B, ist das Luft-Brennstoff-Gemisch zu fett, das heisst es ist zu wenig Luft im Gemisch. Ein zu fettes Gemisch kann zu verschiedenen Problemen führen, nämlich dass die Verbrennung zu schnell abläuft (fast combustion) oder, dass der Motor zu klopfen beginnt, oder dass das Gemisch im Zylinder 21 dann üblicherweise durch Selbstzündung aufgrund des zu hohen Gehalts an Gas zu früh (bezogen auf den Arbeitszyklus) zu verbrennen beginnt (preignition). Bei Betriebszuständen, die darstellungsgemäss rechts der Zündaussetzgrenze 4 liegen, also beispielsweise am Punkt C, ist das Luft-Brennstoff-Gemisch zu mager, das heisst es ist nicht genügend Gas - oder zu viel Luft - für eine optimale Verbrennung im Brennraum vorhanden.

Daher ist man bemüht, den Grossdieselmotor insbesondere im Gasmodus stets an einem optimalen Punkt 5 für das Luft-Brennstoff-Verhältnis zu betreiben, also in Fig. 1 beispielsweise an dem Betriebspunkt A. In der Praxis sind natürliche Schwankungen des Drehmoments bzw. des Luft-Brennstoff-Verhältnisses 1 auch bei konstanter Drehzahl bzw. konstanter Geschwindigkeit des Schiffes nicht zu vermeiden bzw. nicht regelbar, daher gibt es einen Toleranzbereich 6, der in Fig. 2 durch die beiden Geraden 7 und 8 begrenzt ist, innerhalb dessen Abweichungen des Luft-Brennstoff-Verhältnisses 1 vom optimalen Punkt 5 toleriert werden.

Wie eingangs beschrieben, kann im Gasmodus im niedrigeren Lastbereich, beispielsweise bei einer Last von weniger als 25% der Volllast, ohne geeignete Gegenmassnahmen zu viel Spülluft im Zylinder vorhanden sein, um mit der für diese Last benötigten Menge an gasförmigem Brennstoff noch ein Luft-Brennstoff-Gemisch bereitzustellen, dass einen Lambda-Wert hat, der im Toleranzbereich 6 oder wenigstens darstellungsgemäss links der Zündaussetzgrenze 4 liegt. Dies liegt in erster Linie daran, dass der Ladeluftdruck im Einlassreceiver 26 nicht unter den Umgebungsdruck, also üblicherweise den normalen Luftdruck, abgesenkt werden kann. Somit würde der Grossmotor 20 in einen Betriebszustand geraten, der rechts der Zündaussetzgrenze 4 liegt, wo bezogen auf die Gasmenge zu viel Luft im Zylinder 21 ist, das Luft-Brennstoff-Gemisch also zu mager ist. Ein solcher Betriebszustand, bei welchem der Lambda-Wert zu gross ist, ist in Fig. 2 beispielsweise bei dem Punkt C erreicht.

Auch um solche Betriebszustände zu vermeiden, wird erfindungsgemäss vorgeschlagen, im Gasmodus einen Kontrollparameter zu überwachen, welcher von dem Luft-Brennstoff-Verhältnis oder von der Last abhängig ist, mit welcher der Grossmotor 20 betrieben wird. Falls der Kontrollparameter einen vorgebbaren Grenzwert überschreitet, wird der Grossmotor 20 in einem Reduktionsmodus betrieben, in welchem mindestens einer der Zylinder 21 abgeschaltet wird, sodass der Grossmotor 20 im Reduktionsmodus mit einer reduzierten Anzahl von Zylindern 21 betrieben wird. Für die reduzierte Anzahl der Zylinder 21, die während des Reduktionsmodus aktiv sind, wird das Luft-Brennstoffverhältnis, also der Lambda-Wert angepasst, sodass diese aktiven Zylinder vorzugsweise in dem Toleranzbereich 6 (Fig. 2) betrieben werden.

Das erfindungsgemässe Verfahren ist natürlich nicht auf den genannten niedrigen Lastbereich von höchstens 25% der Volllast beschränkt, sondern kann vorteilhaft auch in anderen Lastbereichen verwendet werden. Anhand des Kontrollparameters wird dann ermittelt, ob es möglich ist, die von dem Grossmotor verlangte Last mit einer reduzierten Anzahl von aktiven Zylindern zu erreichen und das Luft-Brennstoff-Verhältnis anzupassen, vorzugsweise so, dass alle aktiven Zylinder in dem Toleranzbereich 6 betrieben werden.

Dadurch, dass im Reduktionsmodus nur noch eine reduzierte Anzahl von Zylindern 21 aktiv ist, also zur Erzeugung des Drehmoments beiträgt, ist die von einem der aktiven Zylinder 21 zu erbringende Leistung grösser als wenn alle Zylinder 21 des Grossmotors 20 zur Erzeugung des Drehmoments beitragen würden. Folglich ist die Menge oder die Masse an gasförmigen Brennstoff, der pro Arbeitszyklus in einen der aktiven Zylinder 21 eingebracht werden muss, grösser als die Menge an Brennstoff, die pro Zylinder eingebracht werden müsste, wenn alle Zylinder 21 des Grossmotors 20 zusammen die gleiche Leistung erbringen müssten. Somit kann in den aktiven Zylindern auch eine grössere Masse an Spülluft vorhanden sein, ohne dass die Gefahr besteht, dass das Luft-Brennstoff-Verhältnis zu gross wird und beispielsweise die Zündaussetzgrenze 4 überschreitet.

Als Kontrollparameter, anhand dessen entschieden wird, ob in den Reduktionsmodus umgeschaltet wird, sind einige Parameter bevorzugt, die im Folgenden in nicht abschliessender Aufzählung erläutert werden.

Beispielsweise kann die Last, bei welcher der Grossmotor betrieben wird, angegeben in Prozent der Volllast, als Kontrollparameter verwendet werden. Falls die Last als Kontrollparameter kleiner wird als eine vorgebbare Grenzlast von beispielsweise 25%, so wird der Grossmotor 20 im Reduktionsmodus mit einer reduzierten Anzahl von Zylindern 21 betrieben.

Es ist auch möglich, die Drehzahl, mit welcher der Grossmotor 20 betrieben wird, als Kontrollparameter zu verwenden. Falls die Drehzahl kleiner wird als eine vorgebbare Grenzdrehzahl, wird der Grossmotor 20 im Reduktionsmodus betrieben.

Eine weitere Möglichkeit besteht darin, das Luft-Brennstoff-Verhältnis, also den λ-Wert als Kontrollparameter zu verwenden. Falls der λ-Wert grösser wird als ein vorgebbarer Wert, wird der Grossmotor 20 im Reduktionsmodus betrieben.

Eine weitere Möglichkeit besteht darin, einen Kontrollparameter zu wählen, der vom Transientverhalten des Grossmotors 20 abhängig ist, also von zeitlich begrenzten Änderungen in Betriebsgrössen des Motor 20, beispielsweise kann die Änderung des Drehmoments als Kontrollparameter verwendet werden.

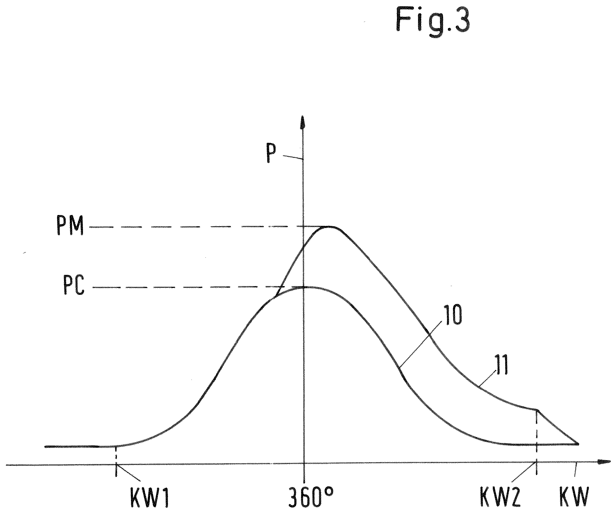

Eine weitere Möglichkeit besteht darin, den Zylinderdruck im Innern des Zylinders 21 für die Bestimmung eines Kontrollparameters heranzuziehen. Ein Beispiel hierzu wird anhand von Fig. 3 erläutert. Fig. 3 zeigt eine schematische Darstellung des Zylinderdrucks p im Inneren eines der Zylinder 21 in Abhängigkeit vom Kurbelwinkel KW. Bei dem Kurbelwinkel KW1 wird das Auslassventil 24 geschlossen und die Kompression beginnt. Bei dem Kurbelwinkel KW=360°, welcher identisch mit dem Kurbelwinkel KW=0° ist, befindet sich der Kolben 23 im oberen Totpunkt, das heisst der Brennraum hat minimales Volumen (maximale Kompression). Bei dem Kurbelwinkel KW2 wird das Auslassventil 24 geöffnet. Die Kurve 10 zeigt den Druckverlauf im Zylinder 21 für den Fall, dass keine Verbrennung im Zylinder 21 erfolgt, repräsentiert also die "geometrische" Kompression, die alleine durch die Kolbenbewegung im Zylinder 21 verursacht wird. Die Kurve 11 zeigt den Druck im Zylinder 21 für den Fall, dass ein Verbrennungsprozess im Zylinder 21 stattfindet. Die Differenz zwischen den Kurven 10 und 11 stellt also den durch den Verbrennungsprozess verursachten Druckunterschied dar.

Das Maximum der Kurve 10, das natürlich bei dem Kurbelwinkel KW=360° liegt, wird als Kompressionsdruck PC bezeichnet. Das Maximum der Kurve 11, das üblicherweise verschoben zu dem Kurbelwinkel KW=360° liegt, wird als maximaler Druck PM bezeichnet. Als Zündsprung (firing ratio) wird dann das Verhältnis aus dem maximalen Druck PM und dem Kompressionsdruck PC, also PM/PC bezeichnet. Der Zündsprung ist eine Funktion des Lambda-Wertes, also des Luft-Brennstoff-Gemisches. Üblicherweise wird der Zündsprung kleiner, wenn der Lambda-Wert grösser wird. Daher kann auch der Zündsprung als Kontrollparameter verwendet werden.

Des Weitern ist auch der Anstieg der Kurve 11 in dem Druckbereich oberhalb von PC, also dort wo die Verbrennung stattfindet, vom Luft-Brennstoff-Verhältnis abhängig, sodass auch die Steigung der Kurve 11, also die Druckänderung in Abhängigkeit von der Änderung des Kurbelwinkels KW für den Kontrollparameter herangezogen werden kann.

Eine weitere Möglichkeit besteht darin, die Stellung des Waste-Gate-Ventils, mit welchem die Menge der Verbrennungsgase eingestellt wird, als Kontrollparameter zu verwenden, oder den Verbrennungsgasstrom als Kontrollparameter messtechnisch zu ermitteln. Wird der Grossmotor beispielsweise mit konstanter Last und allen Zylindern 21 betrieben, so befindet sich das Waste-Gate-Ventil z. B. in einer teilweise geöffneten Stellung, sodass ein Teil der Verbrennungsgase an der Turbine des Turboladers vorbeigeführt werden. Aufgrund von Änderungen in den Umgebungsbedingungen, beispielsweise einem Absinken der Temperatur der Umgebungsluft, öffnet das Waste-Gate-Ventil mehr und mehr, sodass immer mehr Verbrennungsgase am Turbolader vorbei geführt werden. Anhand des Kontrollparameters stellt dann eine Kontrollvorrichtung fest, dass genügend Überschuss an Verbrennungsgasen vorhanden ist, die am Turbolader vorbeigeführt werden, und schaltet in den Reduktionsmodus, in welchem ein oder mehrere Zylinder 21 abgeschaltet wird/werden. Dadurch erhöht sich - bei konstanter Leistung des Grossmotors- die pro aktivem Zylinder 21 zu erbringende Leistung. Folglich wird pro Zylinder 21 mehr Brennstoff benötigt, also auch mehr Ladeluft, wenn man das Luft-Brennstoff-Verhältnis konstant halten will. Also muss der vom Turbolader bereitgestellte Ladeluftdruck erhöht werden. Dazu schliesst man das Waste-Gate-Ventil weiter, teilweise oder ganz, wodurch mehr Verbrennungsgase in den Turbolader gelangen, sodass sich der Ladeluftdruck (und damit die bereitstehende Ladeluftmenge) erhöht.

Es versteht sich, dass natürlich auch mehr als ein Kontrollparameter verwendet werden kann, um zu entscheiden, ob und wann der Grossmotor 20 im Reduktionsmodus betrieben wird.

Ein wesentlicher Aspekt der Erfindung ist es, dass im Reduktionsmodus nicht nur einer oder mehrere Zylinder 21 deaktiviert werden, der Grossmotor 20 also mit einer reduzierten Anzahl von Zylindern 21 betrieben wird, sondern, dass für diese reduzierte Anzahl von Zylindern 21 das Luft-Brennstoff-Verhältnis angepasst wird.

Vorzugsweise wird dabei das Luft-Brennstoff-Verhältnis derart angepasst, dass für die gewünschte Last das Luft-Brennstoff-Verhältnis in den aktiven Zylindern 21 jeweils in dem Toleranzbereich 6 (Fig. 2) liegt.

Auch für die Anpassung des Luft-Brennstoff-Verhältnisses im Reduktionsmodus gibt es mehrere bevorzugte Möglichkeiten, die einzeln oder auch in einer beliebigen Kombination verwendet werden können.

So ist es beispielsweise möglich, für die reduzierte Anzahl der Zylinder 21, welche im Reduktionsmodus aktiv sind, den Ladeluftdruck zu verändern, mit welchem die Spülluft im Einlassreceiver 26 bereitgestellt wird. Eine weitere Möglichkeit besteht darin, die Ladelufttemperatur zu verändern, um dadurch den Lambda-Wert anzupassen. Üblicherweise wird die vom Turbolader gelieferte Ladeluft noch durch einen Ladeluftkühler geführt, bevor sie in den Einlassreceiver 26 eingebracht wird. Indem der Massenstrom des Kühlmediums im Ladeluftkühler verändert wird, kann die Temperatur der Ladeluft eingestellt werden. Eine weitere Möglichkeit zur Anpassung des Lambda-Wertes besteht darin, den Öffnungszeitpunkt und/oder den Schliesszeitpunkt des Auslassventils 24 zu verändern. Mit dem Öffnungs- bzw. Schliesszeitpunkt des Auslassventils 24 ist dabei der Kurbelwinkel KW1 bzw. KW2 (Fig. 3) gemeint, bei welchem das Auslassventil 24 geöffnet bzw. geschlossen wird. Auch ist es möglich, den Lambda-Wert über den Einspritzbeginn und/oder über den Einspritzdruck, mit welchem der gasförmige Brennstoff in den Zylinder 21 eingebracht wird, zu verändern. Mit dem Einspritzbeginn ist dabei derjenige Kurbelwinkel gemeint, bei welchem mit der Einspritzung des gasförmigen Brennstoffs in den Zylinder 21 begonnen wird. Die Änderung des Einspritzbeginns oder des Einspritzdrucks des gasförmigen Brennstoffs führt zwar üblicherweise nicht zu einer Änderung des über den gesamten Zylinder 21 gemittelten Lambda-Wertes, aber zu lokalen Veränderungen des Lambda-Wertes, die es zur Folge haben, dass der Betriebspunkt A (siehe Fig. 2) zwischen der Klopfgrenze 3 und der Zündaussetzgrenze 4 bewegt werden kann.

Im Allgemeinen ist der aktuelle Lambda-Wert in dem jeweiligen Zylinder 21 ermittelbar, denn es ist bekannt oder aus bekannten Parametern berechenbar, wieviel Masse an Luft nach dem jeweiligen Schliessen des Auslassventils 24 im Zylinderinnenraum gefangen ist. Da auch die Masse des eingespritzten Brennstoffs (Gas) bekannt ist, lässt sich der Lambda-Wert als das Verhältnis aus der im Zylinder gefangenen Luftmasse zu derjenigen Luftmasse, welche für eine stöchiometrische Verbrennung benötigt wird, ermitteln.

Eine weitere bevorzugte Massnahme besteht darin, dass im Reduktionsmodus mindestens ein Betriebsparameter des Grossmotors 20, vorzugsweise aber mehrere Betriebsparameter des Grossmotors 20 an die reduzierte Anzahl der aktiven Zylinder 21 angepasst wird bzw. werden.

Vorzugsweise werden die folgenden Betriebsparameter angepasst, wobei nicht alle Betriebsparameter angepasst werden müssen, sondern es auch möglich ist, nur einen Teil der Betriebsparameter anzupassen: Öffnungs- und Schliesszeitpunkt der Auslassventile 24, also die Kurbelwinkel KW1 und KW2, bei welchen die Auslassventile 24 geöffnet bzw. geschlossen werden, Einspritzbeginn für die Einbringung des Brennstoffs, also der Kurbelwinkel, bei welchem mit dem Einspritzen des gasförmigen Brennstoffs in den jeweiligen Zylinder 21 begonnen wird, Einspritzdruck, mit welchem der Brennstoff in die Zylinder 21 eingebracht wird, Zündzeitpunkt des Luft-Brennstoff-Gemisches, Ladeluftdruck, mit welchem die Ladeluft im Einlassreceiver 26 bereitgestellt wird, der Druck eines Hydraulikmediums, beispielsweise Öl, mit welchem Motorkomponenten , beispielsweise die Auslassventile 24, betrieben werden, Zeitpunkt und Umfang der Zylinderschmierung, Druck des Schmiermittels.

Eine weitere bevorzugte Massnahme besteht darin, dass der Kontrollparameter auch im Reduktionsmodus überwacht wird, und der Reduktionsmodus beendet wird, falls der Kontrollparameter die Bedingung für den Reduktionsmodus nicht mehr erfüllt. Es kann dann zu dem normalen Gasmodus oder zu dem Flüssigmodus gewechselt werden.

Eine Kontrollvorrichtung (nicht dargestellt), welche den Wechsel in den Reduktionsmodus oder aus dem Reduktionsmodus heraus vornimmt, und welche die im Reduktionsmodus notwendigen Änderungen vornimmt, kann beispielsweise in das Kontroll- und Steuerungssystem des Grossmotors 20 integriert sein.

Ferner ermittelt die Kontrollvorrichtung vorzugsweise anhand vorgebbarer Kriterien diejenigen Zylinder 21, welche im Reduktionsmodus noch aktiv sind. Insbesondere kann die Kontrollvorrichtung die reduzierte Anzahl der Zylinder 21 ermitteln, mit welcher der Grossmotor 20 im Reduktionsmodus betrieben wird. Auch ist es möglich, dass die Kontrollvorrichtung bei einer gegebenen Anzahl von Zylindern 21 für den Reduktionsmodus diejenigen spezifischen Zylinder 21 auswählt, welche im Reduktionsmodus aktiv sind. Die Auswahl der aktiven Zylinder 21 kann beispielsweise berücksichtigen, dass Schwingungen, z. B. Torsionsschwingungen der Kurbelwelle minimiert werden.

Vorzugsweise wird für den Reduktionsmodus eine minimale Anzahl von aktiven Zylindern 21 bestimmt. Dazu kann beispielsweise anhand des erforderlichen Drehmoments oder der gewünschten Last oder der benötigten Leistung ermittelt werden, welches die minimale Anzahl von Zylindern 21 ist, die für den Reduktionsmodus benötigt werden.

Selbstverständlich ist es auch möglich, beispielsweise bei Laständerungen während des Reduktionsmodus, die Anzahl der aktiven Zylinder 21 zu verändern. Ferner ist es möglich, bei konstanter Anzahl von aktiven Zylindern 21, die spezifischen Zylinder 21 zu ändern, die aktiv sind.

Vorzugsweise wird auch im Reduktionsmodus der Kontrollparameter kontinuierlich oder in vorgebbaren Zeitabständen überwacht, und die reduzierte Anzahl von Zylindern 21 wird angepasst. Während des Reduktionsmodus wird somit überprüft, ob die aktuelle Anzahl der aktiven Zylinder 23 erniedrigt werden kann oder erhöht werden muss.

Im Folgenden wird nun ein bevorzugtes Ausführungsbeispiel des erfindungsgemässen Verfahrens erläutert. Ausgangspunkt ist der Betrieb des Grossmotors 20 im Gasmodus. Die Kontrollvorrichtung überwacht kontinuierlich oder in periodischen Zeitabständen oder nach einem anderen Zeitplan den Kontrollparameter, beispielsweise die Last, mit welcher der Grossmotor 20 betrieben wird. Falls der Kontrollparameter einen vorgebbaren Grenzwert erreicht, schaltet die Kontrollvorrichtung in den Reduktionsmodus. Die Kontrollvorrichtung bestimmt die reduzierte Anzahl der Zylinder 21, welche für den Reduktionsmodus benötigt werden. Vorzugsweise bestimmt die Kontrollvorrichtung die minimale Anzahl von Zylindern 21, die für den Reduktionsmodus benötigt werden. Die Kontrollvorrichtung bestimmt, welche der Zylinder 21 im Reduktionsmodus aktiv sind. Die verbleibenden Zylinder 21 werden deaktiviert, das heisst, in diesen Zylindern 21 findet kein Verbrennungsprozess statt. Das lässt sich beispielsweise dadurch realisieren, dass den deaktivierten Zylindern 21 kein Brennstoff zugeführt wird, sodass diese Zylinder 21 "leer" mitlaufen, also keinen Beitrag zum Generieren des Drehmoments liefern.

Ferner werden die Betriebsparameter des Grossmotors 20 an die reduzierte Anzahl aktiver Zylinder 21 angepasst. Auch die zylinderspezifischen Betriebsparameter, beispielsweise der Öffnungs- und Schliesszeitpunkt der Auslassventile 24 wird an den Reduktionsmodus angepasst.

Insbesondere passt die Kontrollvorrichtung das Luft-Brennstoffverhältnis für die aktiven Zylinder 21 an, sodass das Luft-Brennstoff-Verhältnis zwischen der Klopfgrenze 3 und der Zündaussetzgrenze 4 liegt und insbesondere im Toleranzbereich 6, speziell etwa in der Mitte des Toleranzbereichs 6.

Kontinuierlich oder in vorgebbaren Zeitabständen wird überprüft, ob die Anzahl der aktiven Zylinder erniedrigt werden kann oder erhöht werden muss.

Kontinuierlich oder in vorgebbaren Zeitabständen wird der Kontrollparameter neu ermittelt. Wenn die Bedingungen für den Reduktionsmodus nicht mehr erfüllt sind, der Kontrollparameter also den vorgebbaren Grenzwert in umgekehrter Richtung überschreitet als für die Einleitung des Reduktionsmodus, so wird der Reduktionsmodus beendet und der Grossmotor 20 wird wieder mit allen Zylindern 21 im normalen Gasmodus oder auch im Flüssigmodus betrieben.

## Patentansprüche

1. Verfahren zum Betreiben eines längsgespülten dual-tuel Zweitakt-Grossdieselmotors (20), der mehrere Zylinder (21) aufweist, in einem Gasmodus, wobei in einem Brennraum durch Einbringen eines Brennstoffs ein vorgemischtes Luft-Brennstoff-Gemisch bereitgestellt wird, das ein Luft-Brennstoff-Verhältnis aufweist, wobei mindestens ein Kontrollparameter überwacht wird, welcher von dem Luft-Brennstoff-Verhältnis oder von einer Last abhängig ist, mit welcher der Grossmotor (20) betrieben wird, und wobei der Grossmotor (20) in einem Reduktionsmodus betrieben wird, falls der Kontrollparameter einen Grenzwert erreicht, **dadurch gekennzeichnet, dass** im Reduktionsmodus mindestens ein Zylinder (21) abgeschaltet wird, sodass der Grossmotor (20) mit einer reduzierten Anzahl von Zylindern (21) betrieben wird, wobei für die reduzierte Anzahl von Zylindern (21) das Luft-Brennstoff-Verhältnis angepasst wird.

2. Verfahren nach Anspruch 1, wobei der Kontrollparameter die Last oder die Drehzahl ist, mit welcher der Grossmotor (20) betrieben wird.

3. Verfahren nach einem der vorangehenden Ansprüche, wobei der Kontrollparameter das Luft-Brennstoff-Verhältnis ist.

4. Verfahren nach einem der vorangehenden Ansprüche, wobei der Kontrollparameter vom Transientverhalten des Grossmotors (20) abhängig ist.

5. Verfahren nach einem der vorangehenden Ansprüche, bei welchem der Kontrollparameter vom Zündsprung abhängig ist, welcher das Verhältnis aus dem maximalen Druck (PM) im Zylinder (21) und dem Kompressionsdruck (PC) im Zylinder (21) ist.

6. Verfahren nach einem der vorangehenden Ansprüche, bei welchem im Reduktionsmodus eine minimale Anzahl von Zylindern (21) ermittelt wird, welche für den Reduktionsmodus benötigt werden.

7. Verfahren nach einem der vorangehenden Ansprüche, bei welchem im Reduktionsmodus mindestens ein, vorzugsweise mehrere Betriebsparameter des Grossmotors (20) angepasst werden.

8. Verfahren nach Anspruch 7, bei welchem als Betriebsparameter mindestens einer der folgenden Parameter gewählt wird oder werden: Schliesszeitpunkt eines Auslassventils des Zylinders, Öffnungszeitpunkt des Auslassventils, Einspritzbeginn für die Einbringung des Brennstoffs, ein Einspritzdruck, mit welchem der Brennstoff eingebracht wird, Zündzeitpunkt des Luft-Brennstoff-Gemisches, maximaler Druck im Zylinder (21).

9. Verfahren nach einem der vorangehenden Ansprüche, bei welchem im Reduktionsmodus das Luft-Brennstoff-Verhältnis über einen Ladeluftdruck oder über eine Ladelufttemperatur angepasst wird.

10. Verfahren nach einem der vorangehenden Ansprüche, bei welchem im Reduktionsmodus das Luft-Brennstoff-Verhältnis über den Öffnungszeitpunkt des Auslassventils (24) oder über den Schliesszeitpunkt des Auslassventils (24) angepasst wird.

11. Verfahren nach einem der vorangehenden Ansprüche, bei welchem im Reduktionsmodus das Luft-Brennstoff-Verhältnis über den Einspritzbeginn oder den Einspritzdruck des Brennstoffs angepasst wird.

12. Verfahren nach einem der vorangehenden Ansprüche, bei welchem der Kontrollparameter im Reduktionsmodus überwacht wird, und der Reduktionsmodus beendet wird, falls der Kontrollparameter die Bedingung für den Reduktionsmodus nicht mehr erfüllt.

13. Verfahren nach einem der vorangehenden Ansprüche, bei welchem der Kontrollparameter im Reduktionsmodus überwacht wird, und die reduzierte Anzahl von Zylindern (21) angepasst wird.

14. Längsgespülter dual-fuel Zweitakt-Grossdieselmotor (20), **dadurch gekennzeichnet, dass** der Grossdieselmotor (20) mit einem Verfahren gemäss einem der vorangehenden Ansprüche betrieben wird.

15. Längsgespülter dual-fuel Zweitakt-Grossdieselmotor (20) nach Anspruch 14, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas als Brennstoff in den Brennraum eingebracht wird.

## Claims

1. A method for operating a longitudinally scavenged dual-fuel two-stroke large diesel engine (20) having a plurality of cylinders (21) in a gas mode, wherein a pre-mixed air-fuel mixture having an air-fuel ratio is provided in a combustion chamber by introducing a fuel, wherein at least one control parameter is monitored which is dependent on the air-fuel ratio or on a load with which the large engine (20) is operated, and wherein the large engine (20) is operated in a reduction mode if the control parameter reaches a limit value, **characterized in that** at least one cylinder (21) is switched off in the reduction mode so that the large engine (20) is operated with a reduced number of cylinders (21), the air-fuel ratio being adapted for the reduced number of cylinders (21).

2. A method according to claim 1, wherein the control parameter is the load or the rotational speed at which the large engine (20) is operated.

3. A method according to anyone of the preceding claims, wherein the control parameter is the air-fuel ratio.

4. A method according to anyone of the preceding claims, wherein the control parameter is dependent on the transient behavior of the large engine (20).

5. A method according to anyone of the preceding claims, in which the control parameter is dependent on the firing ratio, which is the ratio of the maximum pressure (PM) in the cylinder (21) and the compression pressure (PC) in the cylinder (21).

6. A method according to anyone of the preceding claims, in which a minimum number of cylinders (21) required for the reduction mode is determined in the reduction mode.

7. A method according to anyone of the preceding claims, in which at least one, preferably several, operating parameter/s of the large engine (20) is/are adapted in the reduction mode.

8. A method according to claim 7, in which at least one of the following parameters is or are selected as the operating parameter: closing time of an outlet valve of the cylinder, opening time of the outlet valve, injection start for the introduction of the fuel, an injection pressure at which the fuel is introduced, ignition timing of the air-fuel mixture, maximum pressure in the cylinder (21).

9. A method according to anyone of the preceding claims, in which, in the reduction mode, the air-fuel ratio is adapted via a charge air pressure or via a charge air temperature.

10. A method according to anyone of the preceding claims, in which, in the reduction mode, the air-fuel ratio is adapted via the opening time of the outlet valve (24) or via the closing time of the outlet valve (24).

11. A method according to anyone of the preceding claims, in which, in the reduction mode, the air-fuel ratio is adapted via the injection start or the injection pressure of the fuel.

12. A method according to anyone of the preceding claims, in which the control parameter is monitored in the reduction mode, and the reduction mode is terminated if the control parameter no longer satisfies the condition for the reduction mode.

13. A method according to anyone of the preceding claims, in which the control parameter is monitored in the reduction mode, and the reduced number of cylinders (21) is adapted.

14. A longitudinally scavenged dual-fuel two-stroke large diesel engine (20), **characterized in that** the large diesel engine (20) is operated with a method according to anyone of the preceding claims.

15. A longitudinally scavenged dual-fuel two-stroke large diesel engine (20) according to claim 14, which can be operated in a liquid mode in which a liquid fuel is introduced into the combustion chamber for combustion, and which can be further operated in a gas mode in which a gas is introduced into the combustion chamber as a fuel.

## Revendications

1. Procédé pour faire fonctionner un grand moteur diesel à deux temps à deux carburants à balayage longitudinal (20) ayant une pluralité de cylindres (21) dans un mode de gaz, dans lequel un mélange air-carburant prémélangé ayant un rapport air-carburant est fourni dans une chambre de combustion en introduisant un carburant, dans lequel au moins un paramètre de commande est surveillé qui dépend du rapport air-carburant ou d'une charge avec laquelle le grand moteur (20) est actionné, et dans lequel le grand moteur (20) est actionné dans un mode de réduction lorsque le paramètre de commande atteint une valeur limite, **caractérisé en ce qu'**au moins un cylindre (21) est arrêté dans le mode de réduction de sorte que le grand moteur (20) est actionné avec un nombre réduit de cylindres (21), le rapport air-carburant étant adapté pour le nombre réduit de cylindres (21).

2. Procédé selon la revendication 1, dans lequel le paramètre de commande est la charge ou la vitesse de rotation à laquelle le grand moteur (20) est actionné.

3. Procédé selon l'une quelconque des revendications précédentes, dans lequel le paramètre de commande est le rapport air-carburant.

4. Procédé selon l'une quelconque des revendications précédentes, dans lequel le paramètre de commande dépend du comportement transitoire du grand moteur (20).

5. Procédé selon l'une quelconque des revendications précédentes, dans lequel le paramètre de commande dépend du rapport d'allumage, qui est le rapport de la pression maximale (PM) dans le cylindre (21) et de la pression de compression (PC) dans le cylindre (21).

6. Procédé selon l'une quelconque des revendications précédentes, dans lequel un nombre minimum de cylindres (21) requis pour le mode de réduction est déterminé dans le mode de réduction.

7. Procédé selon l'une quelconque des revendications précédentes, dans lequel au moins un, de préférence plusieurs, paramètre(s) de fonctionnement du grand moteur (20) est/sont adapté(s) dans le mode de réduction.

8. Procédé selon la revendication 7, dans lequel au moins l'un des paramètres suivants est ou sont sélectionné(s) en tant que paramètre de fonctionnement : temps de fermeture d'une soupape de sortie du cylindre, temps d'ouverture de la soupape de sortie, début d'injection pour l'introduction du carburant, pression d'injection à laquelle le carburant est introduit, moment d'allumage du mélange air-carburant, pression maximale dans le cylindre (21).

9. Procédé selon l'une quelconque des revendications précédentes, dans lequel, dans le mode de réduction, le rapport air-carburant est adapté via une pression d'air de suralimentation ou via une température d'air de suralimentation.

10. Procédé selon l'une quelconque des revendications précédentes, dans lequel, dans le mode de réduction, le rapport air-carburant est adapté via le temps d'ouverture de la soupape de sortie (24) ou via le temps de fermeture de la soupape de sortie (24).

11. Procédé selon l'une quelconque des revendications précédentes, dans lequel, dans le mode de réduction, le rapport air-carburant est adapté via le début d'injection ou la pression d'injection du carburant.

12. Procédé selon l'une quelconque des revendications précédentes, dans lequel le paramètre de commande est surveillé dans le mode de réduction, et le mode de réduction est terminé si le paramètre de commande ne satisfait plus la condition pour le mode de réduction.

13. Procédé selon l'une quelconque des revendications précédentes, dans lequel le paramètre de commande est surveillé dans le mode de réduction, et le nombre réduit de cylindres (21) est adapté.

14. Grand moteur diesel à deux temps à deux carburants à balayage longitudinal (20), **caractérisé en ce que** le grand moteur diesel (20) est actionné avec un procédé selon l'une quelconque des revendications précédentes.

15. Grand moteur diesel à deux temps à deux carburants à balayage longitudinal (20) selon la revendication 14, qui peut être actionné dans un mode liquide dans lequel un carburant liquide est introduit dans la chambre de combustion pour la combustion, et qui peut en outre être actionné dans un mode de gaz dans lequel un gaz est introduit dans la chambre de combustion en tant que carburant.
